# EUROPÄISCHE PATENTSCHRIFT

(11) **EP 3 068 672 B1**
(45) Veröffentlichungstag und Bekanntmachung des Hinweises auf die Patenterteilung: **09.01.2019**
(21) Anmeldenummer: 14799106.1
(22) Anmeldetag: 12.11.2014
(51) Int. Cl.: B60W 30/16, B60W 30/12, B60W 50/14

(54) **FAHRMODUSWECHSEL BEIM FAHRERASSISTENZSYSTEM**
CHANGING OF THE DRIVING MODE FOR A DRIVER ASSISTANCE SYSTEM
CHANGEMENT DE MODE DE CONDUITE DANS UN SYSTÈME D'ASSISTANCE À LA CONDUITE

(30) Priorität: 15.11.2013 DE 102013019141
(43) Veröffentlichungstag der Anmeldung: 21.09.2016
(73) Patentinhaber: Audi AG, 85045 Ingolstadt (DE)
(72) Erfinder: KÜHNE, Marcus, 92331 Beilngries (DE)
(86) Internationale Anmeldenummer: PCT/EP2014/003026
(87) Internationale Veröffentlichungsnummer: WO 2015/070977

(56) Entgegenhaltungen:
- DE-A1-102007 062 698
- DE-A1-102009 050 404
- DE-A1-102011 085 167

## Beschreibung

Die Erfindung betrifft ein Verfahren zum Betreiben eines Kraftfahrzeugs mit einem Fahrerassistenzsystem. Das Fahrerassistenzsystem weist einen autonomen Fahrermodus auf, in welchem es selbständig eine Fahrzeugführung durchführt, die sowohl eine Längsführung (Beschleunigen und Abbremsen) als auch eine Querführung (Lenken) des Kraftfahrzeugs umfasst. Die Erfindung betrifft insbesondere den Wechsel von dem autonomen Fahrmodus in einen vorbestimmten anderen Fahrmodus, in welchem ein Fahrer des Kraftfahrzeugs zumindest einen Teil der Fahrzeugführung selbst durchführen soll.

Eine vollständige Fahrzeugführung durch ein Fahrerassistenzsystem wird auch als pilotiertes Fahren bezeichnet. Eine Herausforderung bei der Einführung des pilotierten Fahrens ist es, dem Fahrer nur dann die Kontrolle über das Fahrzeug zu übergeben, wenn er sie auch wirklich übernehmen kann.

Aus der DE 10 2009 050 404 A1 ist hierzu bekannt, den Fahrer durchgehend während des aktivierten autonomen Fahrmodus zu überwachen, und durch Warnsignale sicherzustellen, dass der Fahrer sich nicht in eine Situation bringt, aus welcher heraus er nicht in einem Notfall schnell genug wieder die Kontrolle über das Fahrzeug übernehmen kann.

Auch aus der DE 10 2006 056 094 A1 ist bekannt, die Anwesenheit des Fahrers auf dem Fahrersitz zu überwachen und bei Abwesenheit des Fahrers eine Selbstdeaktivierungsfunktion auszulösen, durch welche eine kontrollierte Zwangsbremsung des Fahrzeugs in den Stillstand eingeleitet wird.

Aus der EP 1 790 519 A1 ist eine Vorrichtung zur Lenkradüberwachung bekannt, durch welche bestimmt wird, ob ein Fahrer eines Kraftfahrzeugs ein Lenkrad ergriffen hat oder nicht.

Ein weiteres Verfahren zur Erkennung eines Lenkradkontakts ist aus der DE 10 2011 013 023 A1 bekannt.

Aus der EP 2 371 649 A1 ist ein Verfahren zur Ermittlung von auf die Blickrichtung eines Fahrers und/oder die Position der Hände des Fahrers bezüglich des Lenkrads bezogenen Informationen beschrieben. Hierzu ist eine das Lenkrad und den Kopf des Fahrers erfassende Bildgebungseinrichtung vorgesehen.

Die DE 10 2011 085 167 A1 beschreibt ein Stauassistenzsystem zum selbständigen und autonomen Führen einer Längs- und Querführung eines Kraftfahrzeugs. Die Funktion des Stauassistenzsystems kann entweder vom Fahrer oder automatisch deaktiviert werden, wenn eine Systemgrenze erreicht wurde. Falls der Fahrer beim Erreichen einer Systemgrenze des Stauassistenzsystems auf die Übernahmeaufforderung nicht reagiert, wird das Kraftfahrzeug automatisch bis zum Stillstand abgebremst und so in einen sicheren Fahrzustand überführt.

Die DE 10 2007 062 698 A1 beschreibt ein System zum automatischen Fahren am Beispiel eines Staupiloten. Dieser führt eine automatische Staufolgefahrt durch, wobei der Fahrer die Hände nicht am Lenkrad haben muss.

Die aus dem Stand der Technik bekannten Verfahren zur Überprüfung der Fahreranwesenheit schränken den Fahrer dahingehend ein, dass auch während des pilotierten Fahrens die Bewegung räumlich begrenzt ist, damit ein Fahrmoduswechsel aus dem autonomen Fahrmodus heraus sicher ist.

Der Erfindung liegt die Aufgabe zugrunde, einem Fahrerassistenzsystem einen sicheren Fahrmoduswechsel aus einem autonomen Fahrmodus heraus zu ermöglichen.

Die Aufgabe wird durch die Gegenstände der unabhängigen Patentansprüche gelöst. Vorteilhafte Weiterbildungen der Erfindung sind durch die Merkmale der abhängigen Patentansprüche gegeben.

Das durch die Erfindung bereitgestellte Verfahren dient zum Betreiben des Fahrerassistenzsystems des Kraftfahrzeugs. Das erfindungsgemäße Verfahren geht von der Situation aus, dass das Fahrerassistenzsystem in dem autonomen Fahrmodus selbsttätig die Fahrzeugführung durchführt, also eine Längsführung und eine Querführung des Kraftfahrzeugs durchführt. Des Weiteren wird davon ausgegangen, dass, während der autonome Fahrmodus aktiv ist, das Fahrerassistenzsystem ein Wechselsignal empfängt, welches dazu ausgelegt ist, bei dem Fahrerassistenzsystem den Wechsel von dem autonomen Fahrmodus in einen vorbestimmten anderen Fahrmodus anzustoßen. Mit anderen Worten soll der Autopilot durch das Wechselsignal deaktiviert werden. Bei dem genannten anderen Fahrmodus ist vorgesehen, dass ein Fahrer des Kraftfahrzeugs zumindest einen Teil der Fahrzeugführung durchführt, also die Läng- und/oder die Querführung.

Auf das Wechselsignal hin schaltet das Fahrerassistenzsystem aber nicht bedingungslos von dem autonomen Fahrmodus in den anderen Fahrmodus. Vielmehr ist erfindungsgemäß vorgesehen, dass das Fahrerassistenzsystem mittels einer Sensoreinrichtung des Kraftfahrzeugs Fahrerdaten erfasst, welche von einer Körperhaltung zumindest eines Teils des Fahrers abhängig sind. Bei Empfangen des Wechselsignals überprüft das Fahrerassistenzsystem dann, ob die Fahrerdaten eine vorbestimmte Sicherheitsbedingung erfüllen und nur bei erfüllter Sicherheitsbedingung wird dann in den anderen Fahrmodus gewechselt.

Das erfindungsgemäße Verfahren weist den Vorteil auf, dass der Fahrer sich so lange frei bewegen kann, bis das Wechselsignal durch das Fahrerassistenzsystem empfangen wird. Erst danach wird anhand der Fahrerdaten überprüft, ob der Fahrer zur Übernahme der Fahrkontrolle bereit ist.

Bei Verletzung der Sicherheitsbedingung, wenn der Fahrer also nicht die vorbestimmte Körperhaltung für den Fahrmoduswechsel eingenommen hat, wird durch das Fahrerassistenzsystem für den Fahrer ein Hinweis ausgegeben, welcher angibt, welcher Teil der Sicherheitsbedingung nicht erfüllt ist. Der Fahrer kann dann seine Körperhaltung entsprechend korrigieren. Zusätzlich oder alternativ ist vorgesehen, dass der Hinweis eine Handlungsanweisung umfasst, wie die Körperhaltung zu verändern ist, um die Sicherheitsbedingung vollständig zu erfüllen. Hierdurch ergibt sich der Vorteil, dass der Fahrer schneller in die korrekte Körperhaltung gebracht werden kann, was insbesondere bei einer Notabschaltung des autonomen Fahrmodus besonders vorteilhaft ist. Der Hinweis kann beispielsweise als Ansage ausgestaltet sein oder als Videosequenz oder durch ein Leuchtsymbol erfolgen. Ein entsprechendes Kraftfahrzeug weist das beschriebene Fahrerassistenzsystem sowie die beschriebene Sensoreinrichtung auf. Mit anderen Worten ist die Sensoreinrichtung dazu ausgelegt, Fahrerdaten, welche eine Körperhaltung zumindest eines Teils des Fahrers beschreiben, also von der Körperhaltung abhängig sind, zu ermitteln und an das Fahrerassistenzsystem zu übertragen. Das Kraftfahrzeug ist dann dazu ausgelegt, das Fahrerassistenzsystem gemäß einer Ausführungsform des erfindungsgemäßen Verfahrens zu betreiben.

Bei einer vorteilhaften Weiterbildung des erfindungsgemäßen Verfahrens ist vorgesehen, dass die Sensoreinrichtung eine Erkennungseinrichtung zum Erkennen zumindest einer vorbestimmten Handposition aufweist. Mit anderen Worten wird durch die Sensoreinrichtung angezeigt, falls zumindest eine Hand des Fahrers eine vorbestimmte Handposition eingenommen hat. Die Fahrerdaten beinhalten dann entsprechend Handpositionsdaten der Erkennungseinrichtung. Die Sicherheitsbedingung, die vor dem Wechsel des Fahrermodus überprüft wird, umfasst entsprechend, dass eine oder beide Hände des Fahrers an einer Lenkhandhabe des Kraftfahrzeugs angeordnet sind. Als Lenkhandhabe kann das Kraftfahrzeug beispielsweise ein Lenkrad oder ein Steuerhebel aufweisen. Bei dieser Weiterbildung wird also mit anderen Worten sichergestellt, dass der Fahrer seine Hand oder beide Hände am Lenkrad hält. Die Erkennungseinrichtung kann beispielsweise eine ToF-Kamera (ToF - Time of Flight) aufweisen, die beispielsweise in einem Dachmodul des Kraftfahrzeugs angeordnet sein kann und von dort aus das Lenkrad filmt. Zur Erkennung einer Handposition kann beispielsweise die Funktionsbibliothek "KINECT" des Unternehmens Microsoft genutzt werden. Die Verwendung einer ToF-Kamera weist den zusätzlichen Vorteil auf, dass in den Bilddaten der ToF-Kamera auch Tiefeninformationen enthalten sind, anhand welchen zwischen einer am Lenkrad aufliegenden Hand einerseits und einer über dem Lenkrad gehaltenen, das Lenkrad aber nicht berührenden Hand andererseits unterschieden werden kann.

Bei einer anderen Weiterbildung der Erfindung ist vorgesehen, dass die Sensoreinrichtung eine Blickerkennungseinrichtung zum Ermitteln einer Blickrichtung des Fahrers aufweist. Die Fahrerdaten beinhalten entsprechend Blickrichtungsdaten der Blickerkennungseinrichtung. Die Sicherheitsbedingung ist bei dieser Weiterbildung dahingehend formuliert, dass der Fahrer seinen Blick auf einen vorbestimmten Bereich vor dem Kraftfahrzeug gerichtet haben muss. Mit anderen Worten wird durch Überprüfen der Sicherheitsbedingung sichergestellt, dass der Fahrer seine Augen nach vorn gerichtet hat und die Verkehrssituation wahrnimmt. Eine hierfür geeignete Sensorik kann beispielsweise eine Blickrichtungserkennungseinrichtung sein, wie sie an sich im Stand der Technik für ein sogenanntes Eye-Tracking verfügbar ist.

Eine andere Weiterbildung der Erfindung sieht vor, dass die Sensoreinrichtung einen an einem Pedal des Kraftfahrzeugs angeordneten Sensor aufweist und die Fahrerdaten Berührungsdaten des Sensors beinhalten. Die Sicherheitsbedingung umfasst bei dieser Weiterbildung, dass ein Fuß des Fahrers an dem Pedal anliegt und/oder der Fahrer mit dem Fuß das Pedal auf eine vorbestimmte Pedalstellung niederdrückt. Der Sensor kann dahingehend ausgestaltet sein, welcher dazu ausgelegt ist, eine Berührung des Pedals durch einen Fuß eines Fahrers zu signalisieren, wobei durch diese Berührung das Pedal in einer Ruheposition verbleibt, in welche es auch im unbetätigten Zustand gebracht ist, also in dem Fall, dass es nicht durch einen Fuß niedergedrückt wird. Bei Vorsehen eines solchen Sensors ergibt sich der Vorteil, dass der Fahrer nach dem Wechsel von dem autonomen Fahrmodus in den anderen Fahrmodus das Pedal noch nicht betätigt, so dass bei Aktivieren des anderen Fahrmodus beispielsweise kein Bremsmanöver versehentlich eingeleitet wird, falls es sich bei dem Pedal um das Bremspedal handelt. Genauso kann ein unbeabsichtigtes Beschleunigen des Kraftfahrzeugs vermieden werden, für den Fall, dass das Pedal das Gaspedal ist. Indem alternativ gemäß der Sicherheitsbedingung überprüft wird, ob der Fahrer mit dem Fuß das Pedal auch auf eine vorbestimmte Pedalstellung niederdrückt, ergibt sich der Vorteil, dass ein stufenloser Übergang von der Fahrzeugführung durch das Fahrerassistenzsystem im autonomen Fahrmodus einerseits hin zu der Fahrzeugführung durch den Fahrer im anderen Fahrmodus andererseits erwirkt werden kann. Welches Pedal im Zusammenhang mit der Überprüfung der Sicherheitsbedingung überwacht wird, kann beispielsweise in Abhängigkeit vom Kraftfahrzeugtyp vom Fachmann festgelegt werden.

Gemäß einer anderen Weiterbildung der Erfindung ist vorgesehen, dass bei erfüllter Sicherheitsbedingung noch zusätzlich der Wechsel vom autonomen Fahrmodus in den anderen Fahrmodus erst durchgeführt wird, falls der Fahrer eine vorbestimmte Initialgeste durchführt. Beispielsweise kann vorgesehen sein, dass der Fahrer den Wechsel durch Antippen eines Pedals oder durch eine vorbestimmte Drehbewegung des Lenkrads auslöst. Hierbei ist bevorzugt vorgesehen, dass die Initialgeste als Nullhandlung ausgestaltet ist, dass also die durchgeführte Initialgeste keine Auswirkung auf die Fahrzeugführung selbst hat. Beispielsweise kann also das Pedal und/oder das Lenkrad noch so weit von den Aktoren für die Fahrzeugführung entkoppelt bleiben, dass der Fahrer die Initialgeste, also beispielsweise das Treten des Pedals oder das Rütteln am Lenkrad, durchführen kann. Erst danach wird das Pedal und/oder das Lenkrad mit den entsprechenden Aktoren gekoppelt.

Eine andere Weiterbildung der Erfindung sieht vor, dass bei erfüllter Sicherheitsbedingung nicht sofort in den anderen Modus gewechselt wird, sondern zunächst ein Übernahmecountdown im Kraftfahrzeug ausgegeben wird und der Wechsel unmittelbar im Anschluss an den Übernahmecountdown durchgeführt wird, wobei bevorzugt noch einmal die Sicherheitsbedingung überprüft wird und diese weiterhin erfüllt sein muss. Der Übernahmecountdown kann beispielsweise als Ansage ausgestaltet sein, beispielsweise durch die folgende Ansage: "Übernahme in 3-2-1-jetzt." Ein grafischer Übernahmecountdown kann beispielsweise als ein Bargraph ausgestaltet sein, dessen Länge abnimmt, wobei bei der Länge Null dann der Fahrmoduswechsel erfolgt.

Im Zusammenhang mit dem beschriebenen Wechselsignal, welches die Überprüfung der Sicherheitsbedingung auslöst, ist gemäß einer Ausführungsform der Erfindung vorgesehen, dass das Wechselsignal durch ein Bedienelement in Abhängigkeit von einer Betätigung durch den Fahrer erzeugt wird. Zusätzlich oder alternativ dazu kann auch vorgesehen sein, dass ein Steuergerät des Kraftfahrzeugs bei Vorliegen einer Abbruchbedingung das Wechselsignal erzeugt. Beispielsweise kann die Abbruchbedingung besagen, dass sich das Kraftfahrzeug einem Rand einer Zone nähert, in welcher das pilotierte Fahren erlaubt ist. Eine andere Abbruchbedingung kann besagen, dass die Verkehrssituation ein Fahren mit einer Fahrgeschwindigkeit zulässt, die größer als eine für das pilotierte Fahren höchstens zulässige Fahrgeschwindigkeit ist.

Das Kraftfahrzeug ist bevorzugt als Kraftwagen, insbesondere als Personenkraftwagen, ausgestaltet.

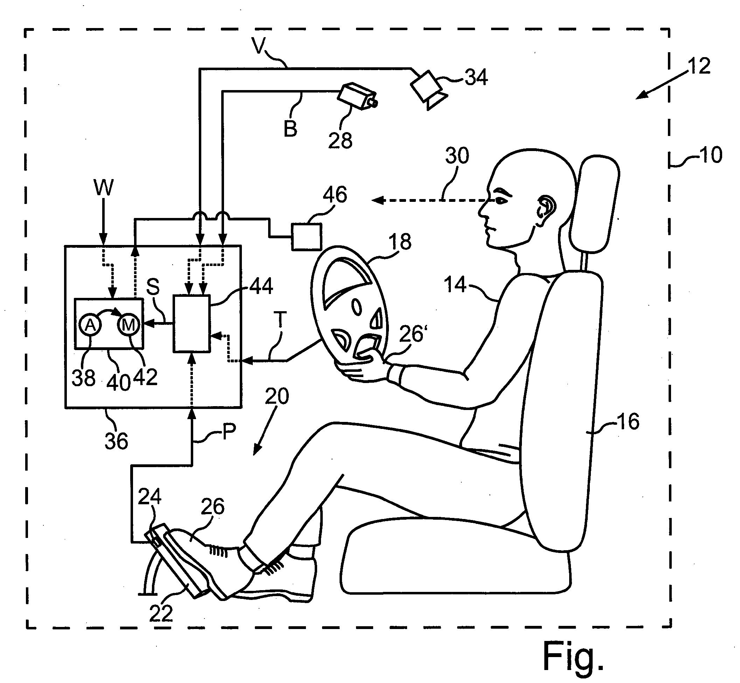

Im Folgenden ist ein Ausführungsbeispiel der Erfindung beschrieben. Hierzu zeigt die einzige Figur eine schematische Darstellung einer Ausführungsform des Kraftfahrzeugs.

Bei dem im Folgenden erläuterten Ausführungsbeispiel handelt es sich um eine bevorzugte Ausführungsform der Erfindung.

Die Figur zeigt von einem Kraftfahrzeug 10 einen Fahrgastraum 12. Bei dem Kraftfahrzeug 10 kann es sich beispielsweise um einen Kraftwagen, insbesondere einen Personenkraftwagen, handeln. Dargestellt ist ein Fahrer 14, der in einem Fahrersitz 16 sitzt. In Fahrzeuglängsrichtung befindet sich vor dem Fahrer 14 ein Lenkrad 18.

In einem Fußraum 20 kann eine Pedalerie des Kraftfahrzeugs 10 angeordnet sein, von welcher in der Figur eine einzelne Pedale 22 dargestellt ist. Die Pedale 22 kann einen Sensor 24 aufweisen, welcher ein Sensorsignal P erzeugt, das signalisiert, ob ein Fuß 26 des Fahrers 14 an der Pedale 22 anliegt. Der Fahrer 14 muss hierzu mit dem Fuß 26 die Pedale 22 nicht zwingend aus seiner Ruhelage auslenken. Der Sensor 24 kann beispielsweise ein Drucksensor sein, welcher eine größere Sensitivität aufweist als eine Rückstelleinrichtung, durch welche die Pedale 22 in der Ruhelage monostabil gehalten ist. Der Sensor 24 kann auch ein kapazitiver Sensor sein. Der Sensor 24 kann auch mehrere Teilsensoren umfassen, so dass eine flächige Erfassung einer Berührung des Fußes 26 mit der Pedale 22 erfolgt.

Eine Blickerfassungseinrichtung 28 kann dazu vorgesehen sein, eine Blickrichtung 30 des Fahrers 14 zu erfassen und Blickrichtungsdaten B zu erzeugen, welche die erkannte Blickrichtung 30 beschreiben. Die Blickerfassungseinrichtung 28 kann beispielsweise ein Infrarotsignal aussenden und im Infrarotbereich ein Auge 32 des Fahrers 14 filmen, wodurch in den Infrarot-Bilddaten eine relative Lage der Iris bezüglich der Retina des Auges 32 ausgewertet werden kann und hieraus eine Ausrichtung der optischen Achse des Auges 32 ermittelt werden kann und diese Ausrichtung als die Blickrichtung 30 in den Blickrichtungsdaten B angegeben werden kann. Die Blickerfassungseinrichtung 28 kann auch in an sich aus dem Stand der Technik bekannter Weise ausgestaltet sein.

Der Fahrgastraum 12 kann durch eine Kamera 34 gefilmt werden, die Videodaten mit einem Abbild des Fahrers 14 erzeugt. Bei der Kamera 34 kann es sich beispielsweise um eine ToF-Kamera handeln. Die Kamera 34 kann beispielsweise als PMD-Kamera (PMD - Photonic Mixing Device) realisiert sein. Das Lenkrad 18 kann einen Berührungssensor aufweisen, durch welchen signalisiert wird, falls eine Hand 26' oder beide Hände das Lenkrad 18 berühren. Der Berührungssensor signalisiert eine Berührung durch ein Lenkradsignal T. Zusätzlich oder alternativ dazu kann das Lenkradsignal T auch eine Drehbewegung des Lenkrads 18 signalisieren.

Das Kraftfahrzeug 10 kann eine Fahrerassistenzeinreichung 36 aufweisen. Die Fahrerassistenzeinrichtung 36 kann beispielsweise durch ein Steuergerät realisiert sein. Die Fahrerassistenzeinrichtung 36 kann einen autonomen Fahrmodus 38 aufweisen, in welchem die Fahrerassistenzeinrichtung 36 das Kraftfahrzeug 10 vollständig selbst führt, dass heißt sowohl eine Längsführung als auch eine Querführung des Kraftfahrzeugs 10 durchführt.

Möchte oder soll der Fahrer 14 die Führung des Kraftfahrzeugs 10 vollständig oder teilweise wieder selbst übernehmen, also mit dem Lenkrad 18 die Querführung und mit der Pedalerie im Fußraum 20 die Längsführung durchführen, so kann dies der Fahrerassistenzeinrichtung 36 durch ein Wechselsignal W signalisiert werden. Das Wechselsignal W kann von einer Steuereinrichtung 40 des Fahrerassistenzsystems 36 empfangen und verarbeitet werden. Die Steuereinrichtung 40 kann beispielsweise ein Programmmodul des Fahrerassistenzsystems 36 sein.

Bevor die Steuereinrichtung 40 einen Wechsel vom autonomen Fahrmodus 38 in einen beispielsweise durch das Wechselsignal W festgelegten anderen Fahrmodus 42 durchführt, überprüft die Steuereinrichtung 40, ob der Wechsel vom autonomen Fahrmodus 38 in den anderen Fahrmodus 42 sicher ist. Die Steuereinrichtung 42 kann hierzu ein Sicherheitssignal S überprüfen, welches von einer Überwachungseinrichtung 44 des Fahrerassistenzsystems 36 erzeugt werden kann und welches anzeigt, dass der Wechsel sicher ist.

Die Überwachungseinrichtung 44 kann beispielsweise ebenfalls ein Programmmodul der Fahrerassistenzeinrichtung 36 sein. Die Überwachungseinrichtung 44 kann die Sensordaten P, die Videodaten V, die Blickrichtungsdaten B und das Lenkradsignal T oder einen Teil davon als Fahrerdaten empfangen und dahingehend auswerten, ob der Wechsel aus dem autonomen Fahrmodus 38 sicher ist und dies dann durch das Sicherheitssignal S signalisieren.

Bevorzugt ist vorgesehen, dass die Übergabe der Kontrolle an den Fahrer 14 nur in dem Fall erfolgt, dass die Überwachungseinrichtung 44 erkennt, dass der Fahrer 14 die Augen auf die Straße vor dem Kraftfahrzeug 10 gerichtet hat, zumindest eine Hand 26' am Lenkrad 18 hält und einen Fuß 26 auf die Pedale 22 der Pedalerie gesetzt hat. Durch das kombinierte Überprüfen mittels der Überwachungseinrichtung 44 wird also ein Verbund aus vorhandenen Sensorsystemen dazu genutzt, die Bereitschaft des Fahrers 14 zur Kontrollübernahme zu erfassen und zu kontrollieren. Die beschriebene Sensorik zur Erfassung der Fahrerkondition und die davon abhängige Kontrollübergabe an den Fahrer 14 macht das Abschalten des autonomen Fahrmodus 38 für den Fahrer 14 sicher. Es ist beim Wechsel aus dem autonomen Fahrmodus 38 in den anderen Fahrmodus 42 heraus sichergestellt, dass der Fahrer 14 seine Augen nach vorn gerichtet hat und die Verkehrssituation wahrnimmt, seine Hand 26' oder beide Hände am Lenkrad 18 hält und seine Füße oder zumindest einen Fuß 26 auf der Pedalerie positioniert ist.

Wird durch die Überwachungseinrichtung 44 erkannt, dass der Fahrer 14 die Sicherheitsbedingungen nicht vollständig erfüllt, so kann ein visueller, akustischer oder audiovisueller Hinweis über eine Ausgabeeinrichtung 46 erzeugt werden, bei der es sich beispielsweise um einen Bildschirm in einer Mittelkonsole des Kraftfahrzeugs 10 und/oder eine Audioanlage des Kraftfahrzeugs 10 handeln kann. Durch den Hinweis kann der Fahrer 14 aufgeklärt werden, wie er seine Körperhaltung ändern muss, also ob er noch eine Hand 26' an das Lenkrad 18 anlegen soll oder seinen Fuß 26 auf das richtige Pedal 22 legen soll oder seine Blickrichtung 30 in der gewünschten Weise ausrichten soll.

Als weitere Absicherung kann noch ein Übernahmecountdown vorgesehen sein und/oder der letzte Schritt zum Wechsel aus dem autonomen Fahrmodus 38 heraus durch den Fahrer 14 selbst ausgelöst werden, indem er eine Initialgeste ausführt, beispielsweise kurz am Lenkrad 18 rüttelt oder die Pedale 22 niederdrückt.

## Patentansprüche

1. Verfahren zum Betreiben eines Fahrerassistenzsystems (36) eines Kraftfahrzeugs (10), wobei das Fahrerassistenzsystem (36) in einem autonomen Fahrmodus (38) selbsttätig eine sowohl eine Längsführung als auch eine Querführung des Kraftfahrzeugs (10) umfassende Fahrzeugführung durchführt und dabei ein Wechselsignal (W) empfängt, welches dazu ausgelegt ist, bei dem Fahrerassistenzsystem (36) einen Wechsel von dem autonomen Fahrmodus (38) in einen vorbestimmten anderen Fahrmodus (42) anzustoßen, in welchem bestimmungsgemäß ein Fahrer (14) des Kraftfahrzeugs (10) zumindest einen Teil der Fahrzeugführung durchführt,
wobei das Fahrerassistenzsystem (36) mittels einer Sensoreinrichtung (18, 24, 28, 34) des Kraftfahrzeugs (10) Fahrerdaten (B, P, T, V), welche von einer Körperhaltung zumindest eines Teils (26, 26', 32) des Fahrers (14) abhängig sind, erfasst und bei Empfangen des Wechselsignals (W) überprüft, ob die Fahrerdaten (B, P, T, V) eine vorbestimmte Sicherheitsbedingung erfüllen, und nur bei erfüllter Sicherheitsbedingung in den anderen Fahrmodus (42) wechselt,
**dadurch gekennzeichnet, dass**
bei verletzter Sicherheitsbedingung durch das Fahrerassistenzsystems (36) für den Fahrer (14) über eine Ausgabeeinrichtung (46) ein Hinweis ausgegeben wird, welcher angibt, welcher Teil der Sicherheitsbedingung nicht erfüllt ist, und/oder welcher eine Handlungsanweisung aufweist, wie die Körperhaltung zu verändern ist, um die Sicherheitsbedingung vollständig zu erfüllen.

2. Verfahren nach Anspruch 1, wobei die Sensoreinrichtung eine Erkennungseinrichtung (18, 34) zum Erkennen einer vorbestimmten Handposition zumindest einer Hand (26') des Fahrers (14) aufweist und die Fahrerdaten (V, T) Handpositionsdaten der Erkennungseinrichtung (18, 34) beinhalten und die Sicherheitsbedingung umfasst, dass eine Hand (26') oder beide Hände des Fahrers (14) an einer Lenkhandhabe (18) des Kraftfahrzeugs (10) angeordnet sind.

3. Verfahren nach einem der vorhergehenden Ansprüche, wobei die Sensoreinrichtung eine Blickerkennungseinrichtung (28) zum Ermitteln einer Blickrichtung (30) des Fahrers (14) aufweist und die Fahrerdaten Blickrichtungsdaten (B) der Blickerkennungseinrichtung (28) beinhalten und die Sicherheitsbedingung umfasst, dass der Fahrer (14) die Blickrichtung (30) auf einen vorbestimmten Bereich vor dem Kraftfahrzeug (10) gerichtet hat.

4. Verfahren nach einem der vorhergehenden Ansprüche, wobei die Sensoreinrichtung einen an einem Pedal (22) des Kraftfahrzeugs (10) angeordneten Sensor (24) aufweist und die Fahrerdaten Berührungsdaten (P) des Sensors (24) beinhalten und die Sicherheitsbedingung umfasst, dass ein Fuß (26) des Fahrers (14) an dem Pedal (22) anliegt und/oder der Fahrer (14) mit dem Fuß (26) das Pedal (22) auf eine vorbestimmte Pedalstellung niederdrückt.

5. Verfahren nach einem der vorhergehenden Ansprüche, wobei bei erfüllter Sicherheitsbedingung der Wechsel erst durchgeführt wird, falls der Fahrer (14) eine vorbestimmte Initialgeste durchführt.

6. Verfahren nach einem der vorhergehenden Ansprüche, wobei bei erfüllter Sicherheitsbedingung ein Übernahmecountdown im Kraftfahrzeug (10) ausgegeben wird und der Wechsel im Anschluss an den Übernahmecountdown durchgeführt wird, falls dann weiterhin die Sicherheitsbedingung erfüllt ist.

7. Verfahren nach einem der vorhergehenden Ansprüche, wobei das Wechselsignal (W) durch ein Bedienelement in Abhängigkeit von einer Betätigung durch den Fahrer (14) und/oder durch ein Steuergerät bei Vorliegen einer Abbruchbedingung erzeugt wird.

## Claims

1. Method for operating a driver assistance system (36) of a motor vehicle (10), wherein, in an autonomous driving mode (38), the driver assistance system (36) independently performs a vehicle guidance comprising both a longitudinal guidance and a lateral guidance of the motor vehicle (10) and at the same time receives a change signal (W) that is designed to initiate a change in the driver assistance system (36) from the autonomous driving mode (38) to a predetermined other driving mode (42) in which it is intended that a driver (14) of the motor vehicle (10) performs at least a part of the vehicle guidance,
wherein the driver assistance system (36) detects driver data (B, P, T, V) that depend on the posture of at least one part (26, 26', 32) of the driver (14) by means of a sensor device (18, 24, 28, 34), and when the change signal (W) is received, it is checked whether the driver data (B, P, T, V) meet a predetermined safety condition, and the change to the other driving mode (42) is made only if the safety condition is met,
**characterised in that**
when the safety condition is infringed, an indication is issued for the driver (14) by the driver assistance system (36) via an output device (46), which specifies which part of the safety condition is not fulfilled, and/or which comprises an instruction on how the posture is to be changed in order to completely fulfil the safety condition.

2. Method according to claim 1, wherein the sensor device comprises a detection device (18, 34) for detecting a predetermined hand position of at least one hand (26') of the driver (14) and driver data (V, T) includes hand position data of the detection device (18, 34) and comprises the safety condition that one hand (26') or both hands of the driver (14) are arranged on a steering element (18) of the motor vehicle (10).

3. Method according to one of the preceding claims, wherein the sensor device comprises a view detection device (28) for determining a view direction (30) of the driver (14) and the driver data includes view direction data (B) of the view detection device (28) and comprises the safety condition that the driver (14) has directed the view direction (30) on a predetermined region in front of the motor vehicle (10).

4. Method according to one of the preceding claims, wherein the sensor device comprises a sensor (24) arranged on a pedal (22) of the motor vehicle (10) and the driver data includes contact data (P) of the sensor (24) and comprises the safety condition that a foot (26) of the driver (14) rests on the pedal (22) and/or the driver (14) depresses the pedal (22) with the foot (26) to a predetermined pedal position.

5. Method according to one of the preceding claims, wherein, when a safety condition is fulfilled, the change only occurs when the driver (14) performs a predetermined initial movement.

6. Method according to one of the preceding claims, wherein, when a safety condition is fulfilled, a takeover countdown is output in the motor vehicle (10) and the change is carried out following the takeover countdown, provided that the safety condition continues to be fulfilled.

7. Method according to one of the preceding claims, wherein the change signal (W) is generated by an operating element depending on an actuation by the driver (14) and/or by a control device in the event of a termination condition.

## Revendications

1. Procédé de mise en oeuvre d'un système d'assistance à la conduite (36) d'un véhicule automobile (10), dans lequel le système d'assistance à la conduite (36) effectue automatiquement dans un mode de conduite autonome (38) une conduite de véhicule comprenant autant une conduite longitudinale qu'une conduite transversale du véhicule automobile (10) et reçoit en l'occurrence un signal de changement (W) qui est conçu de manière à déclencher, dans le système d'assistance à la conduite (36), un changement du mode de conduite autonome (38) à un autre mode de conduite prédéterminé (42), dans lequel, conformément aux dispositions, un chauffeur (14) du véhicule automobile (10) effectue au moins une partie de la conduite du véhicule,
dans lequel le système d'assistance à la conduite (36) détecte, au moyen d'un dispositif capteur (18, 24, 28, 34) du véhicule automobile (10), des données de conduite (B, P, T, V), qui dépendent d'une attitude corporelle d'au moins une partie (26, 26', 32) du chauffeur (14) et vérifie, lors de la réception du signal de changement (W) si les données de conduite (B, P, T, V) remplissent une condition de sécurité prédéterminée et ne passe dans l'autre mode de conduite (42) que lorsque la condition de sécurité est remplie,
**caractérisé en ce que**,
lorsque la condition de sécurité est enfreinte par le système d'assistance à la conduite (36), il est émis pour le chauffeur (14) via un dispositif de sortie (46) une indication qui indique la partie de la condition de sécurité qui n'est pas remplie et/ou qui présente une instruction d'action visant la façon de modifier l'attitude du corps pour remplir complètement la condition de sécurité.

2. Procédé selon la revendication 1, dans lequel le dispositif capteur présente un dispositif de reconnaissance (18, 34) pour reconnaître une position prédéterminée d'au moins une main (26') du chauffeur (14) et les données de conduite (V, T) contiennent des données de position manuelle du dispositif de reconnaissance (18, 34) et la condition de sécurité implique qu'une main (26') ou les deux mains du chauffeur (14) soit ou soient agencées sur une manette de direction (18) du véhicule automobile (10).

3. Procédé selon l'une quelconque des revendications précédentes, dans lequel le dispositif capteur présente un dispositif de reconnaissance visuelle (28) pour déterminer une direction visuelle (30) du chauffeur (14) et les données de conduite contiennent des données de direction visuelle (B) du dispositif de reconnaissance visuelle (28) et la condition de sécurité implique que le chauffeur (14) a dirigé son regard (30) sur une zone prédéterminée située devant le véhicule automobile (10).

4. Procédé selon l'une quelconque des revendications précédentes, dans lequel le dispositif capteur présente un capteur (24) agencé sur une pédale (22) du véhicule automobile (10) et les données de conduite contiennent des données de contact (P) du capteur (24) et la condition de sécurité implique qu'un pied (26) du chauffeur (14) s'applique sur la pédale (22) et/ou que le chauffeur (14) enfonce avec le pied (26) la pédale (22) dans une position prédéterminée de la pédale.

5. Procédé selon l'une quelconque des revendications précédentes, dans lequel, lorsque la condition de sécurité est remplie, le changement n'est effectué que lorsque le chauffeur (14) effectue un geste initial prédéterminé.

6. Procédé selon l'une quelconque des revendications précédentes, dans lequel, lorsque la condition de sécurité est remplie, un compte à rebours de prise en charge est effectué dans le véhicule automobile (10) et le changement à la suite du compte à rebours de prise en charge est réalisé au cas où la condition de sécurité est en outre remplie ensuite.

7. Procédé selon l'une quelconque des revendications précédentes, dans lequel le signal de changement (W) est produit par un élément de service en fonction d'une commande par le chauffeur (14) et/ou par un appareil de commande en présence d'une condition de rupture.
